# EUROPEAN PATENT SPECIFICATION

(11) **EP 0 440 714 B1**
(45) Date of publication and mention of the grant of the patent: **19.04.1995**
(21) Application number: 89912231.1
(22) Date of filing: 25.10.1989
(51) Int. Cl.: D21J 1/00, D21B 1/32

(54) **MANUFACTURE OF MOULDED OBJECTS FROM A FLUIDIZED FIBRE RAW MATERIAL**
Herstellung von geformten gegenstaenden Ausgehend von einem fluidisiertem Rohmaterial
FABRICATION D'OBJETS MOULES A PARTIR D'UN MATERIAU BRUT FIBREUX FLUIDISE

(30) Priority: 25.10.1988 DK 5922/88
(43) Date of publication of application: 14.08.1991
(73) Proprietor: BRODRENE HARTMANN A/S, DK-2800 Lyngby (DK)
(72) Inventor: RASMUSSEN, Torben, DK-2800 Lyngby (DK)
(74) Representative: Boeters, Hans Dietrich, Dr.
(86) International application number: DK8900249
(87) International publication number: WO9004677

(56) References cited:
- EP-A- 0 084 917
- EP-A- 0 246 588
- CH-A- 0 378 665
- SE-A- 0 164 450
- US-A- 4 622 099

## Description

The invention concerns a method for the manufacture of objects of a fluidized fibre raw material.

The characteristic of the invention is that as fibre raw material at least partly a starting material containing long fibres is used which is processed into a pulp partly by the application of shake-out in a pulper, partly by a preceding, separate, controlled dry grinding, by means of which the starting material is separated in dosage amounts and divided into its fibres whereafter the object is manufactured from the pulp thus created.

The application of a pulper as an important processing stage of the fibre raw material for the creation of a pulp from which the objects desired shall be manufactured is a.o. undertaken in cases where the fibre raw material is received as dry masses in bales, e.g. as paper waste (US-A-4 601 785).

In the pulper a heavy whirl formation is produced whereby the single elements of the material rub against each other and thereby become divided whereby the raw material is separated into fibres.

Especially at heterogen material such as waste and recycling paper it must be assumed that this separation is going on successively, so that the fibres first released are exposed to a further substantial processing than the fibres released at a later stage. In other words, the processing in the pulper will in its proceeding thus be uncontrolled, and thereby heterogen. The further processing mentioned means that both the degree of grinding (°SR-Schopper-Riegler), and thereby the mucus creation in the pulper is increased which has a negative influence on the later drainage of the object manufactured from the pulp, and increases the shrinkage of the object during the drainage and drying of the material of this.

The object of the invention is to state how in order to avoid these disadvantages a substantially improved control can be achieved of the separation of the raw material into fibres which must be carried out before the final manufacture of the objects is undertaken.

A result of the procedure according to the invention is that to the pulper at least partly is added a fibre raw material whose fibres already to a substantial degree are separated into individual fibres whereby they are more immediately and simultaneously susceptible for the self grinding effect and the mixture effect created in the pulper. As the pulper processes a more uniform raw material the grinding degree produced in the pulper by means of self-grinding can be controlled to being more uniform, and the previously mentioned binding of water in the pulp leaving the pulper will thereby be easier to control.

The method in accordance with the invention will however also result in other advantages which are especially valuable at the reapplication of paper waste.

Recycling paper waste is found in a variety of qualities and grading. If this material prior to the shake-out in the pulper is subjected to a separate, controlled dry grinding, it is often possible to use a poorer and thus cheaper quality, than if the separation process was only undertaken as a shake-out in the pulper.

It is within the scope of the invention to carry out the already mentioned preceding, separate dry grinding as a multiple-stage process, providing the possibility of a very efficient manner in which to separate the starting material in dosage amounts.

In this manner e.g. it will also be possible to separate into fibres and other particles waste paper material containing plastic, water resistant paper, plastic laminated carton and paper to the degree desired. Separated particles which are not paper may then before being added to the pulper be removed or it is possible to let these particles since they are divided form part of the following production process.

At an embodiment for the invention a long-fibre starting material having been subjected to a separate, controlled dry grinding be added to an already in the pulper created pulp and be subjected to a common shake-out with this.

In this way an object may be produced whose fibre material is partly bound by hydrogenous fibre bindings partly has been mixed with air suspended fibre material for whose binding glue is normally used.

It has turned out that in this way it is possible to give up a traditional complete hydrogen binding of all the pulp, which means that the drainage and thereby the production time may be substantially reduced. Furthermore, the procedure facilitates a strict control of the strength properties desired for the object since it is possible to have strict control of these when glue is added.

It will e.g. be possible to carry out a multiple-stage dry grinding by the application of a tearing machine also called a shredder followed by a treatment in a hammer mill which thus can receive the material from the shredder in dosage amounts and which exposes the material to a further grinding process before it, if required also in special dosage amounts, is added to the pulper for the actual shake-out processing.

The separate, controlled dry grinding suggested according to the invention of the fibre raw materials prior to their shake-out in the pulper also provides the possibility for the co-application of recycling paper waste in cases where the objects to be manufactured must be shrink proof and measure proof. Examples of this are tray or casing shaped packaging for frail objects, such as glassware or eggs. For such packaging a large amount of wood-pulp paper raw material, e.g. up to 80-100 p.c. is used. A starting material with a high content of wood-pulp fibres results in less shrinkage than if the fibres were cellulose fibres. It has appeared that by application of the method in accordance with the invention to a wood-pulp paper material it is possible to add even a substantial amount of cheap recycling paper waste, including carton waste, which not necessarily contain wood-pulp, since due to the preceding separate, controlled dry grinding of the raw material it is possible to manufacture a pulp in the pulper, which does not result any undesired shrinkage of the objects manufactured.

It is a well know principle for the manufacture of objects of a fluidizable fibre raw material to apply auxiliary material such as filling material and chemicals, and binding agents. The auxiliary materials decide whether the manufactured objects shall be more or less strong, hard and transparent, or weak, soft and absorbing. The present invention also has advantages in connection with the application of such auxiliary materials.

The division of the manufacturing process in a number of steps provides increased possibility of addition of auxiliary materials at various stages of the total manufacturing process. The open structure achieved as a result of the invention's characteristic manufacturing processing of the final pulp even increases the possibility of the addition of the auxiliary materials so that e.g. a binding agent can be applied more or less integrating in the surface of the manufactured objects for the procurement of an increased wall strength. The addition of auxiliary materials during the preceding separate, controlled dry grinding will in a special good way further an extremely uniform distribution of the auxiliary materials in the fibre mass manufactured. Of course the auxiliary materials may also be added to the pulper.

Furthermore, it lies within the scope of the invention that the shake-out in the pulper is carried out as a processing procedure controlled and dependent on the preceding separate grinding. In other words, the degree of self-grinding obtained in the pulper may be adjusted to the degree of the grinding which according to circumstances has been carried out at the preceding grinding step(s). As an example, a paper pulp which in the pulper has been separated into a normal, through self-grinding achieved grinding degree of 60° SR (Schopper-Riegler), be added dry grounded fibre material, whereafter the mixture is processed in the pulper for another 5 minutes. Products manufactured from such a mixture pulp may be given a special large thickness, porosity and permeability, and at the same time a low density. This means, that e.g. the products may have good drainage properties, and therefore may be manufactured also with large wall thickness, and that it is possible if desired in spite of large wall thickness to maintain a substantial material softness and absorbtion ability.

Due to these properties, which are common characteristics for all the embodiments for the method according to the invention, the method may advantageously be incorporated in a processing technique for objects which are based on the depositing of the pulp on contour having suction moulds or endless moulding bans. A pulp manufactured according to the method of the invention facilitates unproblematic a uniform distribution of the pulp on the form, even where products with large wall thickness are produced meaning that the objects may have a uniform thickness and thus a uniform strength.

### Example

A waste paper material containing long fibres is separated into dosage amounts in e.g. two processing stages, since the material first by means of a tearing machine, a so-called shredder, is disintegrated into such a size by which it in a dosage amount can be applied to a hammer mill in which the material during dry grinding is further disintegrated and separated into its fibres. Depending on whether the subsequent shake-out in a pulper is undertaken in batches or continuously the dosage material thus achieved may be transported preferably pneumatic to an intermediate stock or direct to the pulper.

The shake-out in the pulper may e.g. be undertaken as follows:

### Processing method a):

All waste paper material is dry grounded in the hammer mill whereafter the grounded product is processed in the pulper for a short processing time of e.g. 10 minutes. To the pulper may be added auxiliary materials. Furthermore the pulper may have built in separation organs for the dislocation of heavy material particles.

### Processing method b):

In a discontinuously working pulper waste paper material which has been directly added into the pulper is processed. Approximately 5 to 10 minutes before the termination of this shake-out processing a dry grounded waste paper material is added to the pulper in amounts from 5 p.c. to 50 p.c. of the final production amount of the pulper, the amount of this addition amount being fixed with a view e.g. to the drainage properties of the final pulp mass, or the structural properties of the desired product. Auxiliary materials if any may be added in desired quantities.

### Processing method c):

In a continuously working pulper waste paper material which has been directly added into the pulper is processed, this material being continuously added to the pulper. A dry grounded waste paper material is added evenly dosed to the pulp thus manufactured in amounts from 5 p.c. to 50 p.c. of the final production amount of the pulper, the size of the addition amount being fixed with a view to the drainage properties of the final pulp mass, or the structural properties of the desired product. Auxiliary materials if any are dose added. The draining-off of pulp from the pulper is undertaken most expedient by de-pumping.

### Processing method d):

To a pulp which is already processed in a pulper and which many contain a substantial amount of cellulose, a material is added, which is or contains dry grounded waste paper material as stated in the processing methods a to c. The addition may e.g. be performed in a special mixture apparatus. This processing method is especially advantageous in order to avoid shrinkage, and/or to achieve a special high quality softness of the desired end product.

Waste paper also called return paper is of course a very mixed material which contains fibres of many different lengths. However, it has turned out that the average fibre length is so large that especially the drainable and structure advantages may be achieved by the application of different, but separate advantageous processing methods.

It is possible to apply the processing method in accordance with the invention for the manufacture of various kinds of starting materials, including also so-called virgin material. However, the examples show that it also results in major advantages when the starting material is of poorer quality and consists of waste paper.

## Claims

1. A method for the manufacture of objects of a fluidized cellulosic fibre raw material, by forming a pulp of said raw material, depositing a layer of the resultant pulp, and drying said pulp, characterized in that the layer is deposited on a pourous mould and dried by suction of the liquid contained in the pulp, and that the fibre raw material contains long fibres, the pulp being processed by directly shaking out one amount of said material in a pulper, and by subjecting a second amount of said material to a preceding separate dry grinding to separate it into its fibres before said second amount in supplied to said pulper, the second amount being dosed from 5% to 50%.

2. Method in accordance with claim 1, characterized by the fact that said dry grinding is performed as a multiple-stage process.

3. Method in accordance with claim 1 or 2, characterized by the fact that the shake-out is performed as a processing procedure controlled and dependent on the separate dry grinding.

4. Method in accordance with any of the preceding claims, characterized by the fact that a long-fibred starting material subjected to a separate controlled dry grinding is added in dosage amounts to a pulp already formed in the pulper and subjected to a common time limited shake-out with this.

5. Method in accordance with any of the preceding claims, characterized by the fact that an addition is carried out of auxiliary materials in connection with the preceding separate dry grinding.

## Patentansprüche

1. Verfahren zur Herstellung von Gegenständen aus einem fluidisierten Zellulose-Faserrohstoff, durch eine Bildung einer Pulpe aus diesem Rohstoff, eine Ablagerung einer aus der Pulpe bestehenden Schicht und eine Trocknung dieser Pulpe, dadurch **gekennzeichnet**, dass die Schicht auf einer porösen Form abgelagert und durch Absaugung der in der Pulpe vorhandenen Flüssigkeit getrocknet wird, und dass der Faserrohstoff lange Fasern enthält, wobei die Pulpe durch ein direktes Ausschlagen einer Menge dieses Rohstoffs in einem Pulper verarbeitet wird, und eine weitere Menge des Rohstoffs einer vorhergehenden getrennten Trockenvermahlung zwecks seiner Aufteilung in seine Fasern unterworfen wird, bevor diese weitere Menge dem Pulper zugeführt wird, welche weitere Menge in einer Grössenordnung von 5 % bis 50 % dosiert wird.

2. Verfahren gemäss Anspruch 1, dadurch **gekennzeichnet**, dass die Trockenvermahlung als ein Mehrstufenprozess durchgeführt wird.

3. Verfahren gemäss Anspruch 1 oder 2, dadurch **gekennzeichnet**, dass das Ausschlagen als in Abhängigkeit von der getrennten Trockenvermahlung gesteuerter Verarbeitungsprozess durchgeführt wird.

4. Verfahren gemäss einem jeden der vorhergehenden Ansprüche, dadurch **gekennzeichnet**, dass ein einer getrennten und gesteuerten Trockenvermahlung unterzogenes langfaseriges Ausgangsmaterial in dosierten Mengen einer bereits im Pulper gebildeten Pulpe zugesetzt wird und mit dieser einer gemeinsamen zeitlich begrenzten Ausschlagung unterzogen wird.

5. Verfahren gemäss einem jeden der vorhergehenden Ansprüche, dadurch **gekennzeichnet**, dass in Verbindung mit der vorhergehenden getrennten Trockenvermahlung ein Zusatz von Hilfsstoffen vorgenommen wird.

## Revendications

1. Procédé pour la fabrication d'articles sur la base d'une matière première fluidisée en fibres cellulosiques en formant une pulpe de ladite matière première, en déposant une couche de la pulpe résultante et en séchant ladite pulpe, caractérisé en ce que la couche est déposée sur un moule poreux et est séchée par aspiration du liquide contenu dans la pulpe et en ce que la matière première fibreuse contient des fibres longues, ladite pulpe étant préparée par raffinage direct d'une quantité de ladite matière dans un pulpeur, et en soumettant une deuxième quantité de ladite matière à un broyage à sec préalable afin de la séparer en ses fibres avant de délivrer ladite deuxième quantité au pulpeur, la deuxième quantité étant dosée de 5 % à 50 %.

2. Procédé selon la revendication 1, caractérisé en ce que ledit broyage à sec est réalisé comme processus à plusieurs étapes.

3. Procédé selon la revendication 1 ou 2, caractérisé en ce que le raffinage est réalisé comme processus de traîtement contrôlé et dépendant du broyage à sec séparé.

4. Procédé selon l'une quelconque des revendications précédentes, caractérisé en ce qu'une matière de départ à libres longues qui a été soumise à un broyage à sec contrôlé séparé en quantités dosées est additionnée à une pulpe déjà formée dans le pulpeur et est raffinée en commun avec celle-ci dans un laps de temps limité.

5. Procédé selon l'une quelconque des revendications précédentes, caractérisé en ce qu' au broyage à sec séparé préalable une addition d'agents auxiliaires est réalisée.
